(19) **Europäisches Patentamt / European Patent Office / Office européen des brevets**

(11) **EP 1 664 126 B2**

(12) **NEW EUROPEAN PATENT SPECIFICATION**
After opposition procedure

(45) Date of publication and mention
of the opposition decision:
**18.09.2013 Bulletin 2013/38**

(45) Mention of the grant of the patent:
**13.01.2010 Bulletin 2010/02**

(21) Application number: **04765178.1**

(22) Date of filing: **14.09.2004**

(51) Int Cl.:
*C08B 31/18* (2006.01)     *A23L 1/0522* (2006.01)

(86) International application number:
**PCT/EP2004/010264**

(87) International publication number:
**WO 2005/026212 (24.03.2005 Gazette 2005/12)**

(54) **CLEAN LABEL STABILISED STARCH WITH IMPROVED ORGANOLEPTIC PROPERTIES**

STABILISIERTE CLEAN-LABEL-STÄRKE MIT VERBESSERTEN ORGANOLEPTISCHEN EIGENSCHAFTEN

AMIDON A VISCOSITE STABLE AYANT DES PROPRIETES ORGANOLEPTIQUES AMELIOREES

(84) Designated Contracting States:
**AT BE BG CH CY CZ DE DK EE ES FI FR GB GR HU IE IT LI LU MC NL PL PT RO SE SI SK TR**

(30) Priority: **15.09.2003 EP 03255749**

(43) Date of publication of application:
**07.06.2006 Bulletin 2006/23**

(73) Proprietor: **Cargill, Incorporated**
**Wayzata,**
**Minnesota 55391 (US)**

(72) Inventors:
• **VEELAERT, Sarah**
**NL-4617 GA Bergen op Zoom (NL)**
• **VANHEMELRIJCK, Jozef, Guido, Roza**
**B-1860 Meise (BE)**
• **FONTEYN, Dirk**
**B-22820 Bonheiden (BE)**
• **VEESAERT, Roger, Kamiel, Casimir**
**B-9981 Sint Laureins (BE)**
• **WALHOUT, Elizabeth, Adriana**
**NL-4542 NS Hoek (NL)**

(74) Representative: **Wilkinson, Stephen John**
**Stevens, Hewlett & Perkins**
**1 St. Augustine's Place**
**Bristol BS1 4UD (GB)**

(56) References cited:
EP-A- 0 823 439     WO-A-99/00425
JP-A- H11 115       US-A- 3 463 668
US-A- 3 607 393     US-A- 4 072 535
US-A- 4 368 212     US-A- 4 369 308
US-A- 5 342 932     US-A- 5 385 608
US-4- 5 192 576

• SEGUCHI M: "OIL BINDING CAPACITY OF PRIME STARCH FROM CHLORINATED WHEAT FLOUR" CEREAL CHEMISTRY, vol. 61, no. 3, 1984, pages 241-244, XP009025938 ISSN: 0009-0352
• RUSSELL P L ET AL: "A STUDY BY ESCA OF THE SURFACE OF NATIVE AND CHLORINE-TREATED WHEAT STARCH GRANULES THE EFFECTS OF VARIOUS SURFACE TREATMENTS" JOURNAL OF CEREAL SCIENCE, vol. 5, no. 1, 1987, pages 83-100, XP009025922 ISSN: 0733-5210

**EP 1 664 126 B2**

**Description**

The current invention relates to stabilised starches devoid of organoleptic impurities, a process for preparing them and their use in food, feed, pharma and cosmetic products.

Starch is used in food to contribute to physical properties, such as texture, viscosity, gel formation, adhesion, binding, moisture retention, film formation and homogeneity.

It is undesirable for starch to negatively affect the taste, odor, or color of the foods in which it is used.

EP 0499306 discloses the treatment with a protease in order to improve the organoleptic properties by removal of the proteins inherent to the native starch granule and/or the odour compounds residing in the protein matrix of the native starch granule. WO 99/00425 describes the removal of surface bound and internal proteins with a protease.

For food applications, especially when specific viscosity profiles are desired, starches are very often stabilized by treatment with chemical reagents, resulting in modified starches like esterified, etherified and crosslinked starches.

In fact, the treatment of starch and/or the chemical modification of the starch can all affect the sensory qualities of starch, and eventually during such a treatment newly formed products might affect the organoleptic properties.

For some years there has been a trend to make stabilized starches without the use of conventional crosslinkers.

WO 95 04082 relates to a stabilised starch prepared by dehydration and heating of a native starch at neutral or alkaline pH. The starches obtained by such a process have an off odour, typically related to roasting.

US 3,607,393 relates to a method for preparing starch useful as a batter mix and said method comprises the treatment with a hypohalite followed by oxidation with hydrogen peroxide.

EP 0 811 633 relates to a stabilised starch prepared without the use of conventional cross-bonding reagents but in presence of active chlorine.

US 5,385,608 relates to absorbable dusting powders suitable for medical applications and obtained by treating starch with a hypochlorite to remove protein and to oxidize some of the hydroxyl groups. The modified starch thus obtained has a protein content of less than about 0.15% by weight and the hydroxyl groups are oxidised to a level of from about 0.03 to about 0.5% by weight.

Currently there is a need for a improved process wherein a further stabilized starch devoid of organoleptic impurities is obtained.

The current invention provides such a process, product and use.

The current invention relates to a process for preparing stabilised starches and said process is comprising the following steps:

a. Treating starch with an effective amount of reactant as defined in claim 1 whereby organoleptic impurities and/or precursors of organoleptic impurities are converted into hydrolysed and/or oxidatively degraded organoleptic impurities and/or precursors of organoleptic impurities, and

b. Bleaching said starch and hydrolysed and/or oxidatively degraded organoleptic impurities and/or precursors of organoleptic impurities,

c. Recovering stabilised starch.

The current invention relates to a process wherein step b) is performed with 100-8000 ppm active chlorine based on dry substance of starch. Furthermore, the current invention relates to a process wherein step b) is performed at a temperature of from 5°C- 60°C, preferably from 10 - 55°C. The current invention further relates to a process wherein step b) is performed at pH is from 3 to 12, preferably from 7.5 to 11.5, more preferably from 8.5 to 11. Finally, the process is **characterised in that** bleaching in step b) is performed during a reaction time up to 24 hours.

The current invention further relates to a process according to claim 1 comprising the following steps:

a. Treating starch containing from 0.2 to 0.4% w/w protein with an effective amount of reactant whereby organoleptic impurities and/or precursors of organoleptic impurities are converted into hydrolysed and/or oxidatively degraded organoleptic impurities and/or precursors of organoleptic impurities, and

b. Bleaching said starch and hydrolysed and/or oxidatively degraded organoleptic impurities and/or precursors of organoleptic impurities in presence of from 500 to 4000 ppm active chlorine based on dry substance of starch, at pH of 8.5 to 11, preferably pH of 8.5 to 10.5, at a temperature from 5 to 60°C, preferably from 10 to 55°C, for a time between the dosing time of the active chlorine up to 24 hours,

c. Recovering stabilised starch.

The current invention relates to a process according to claim 1 comprising the following steps:

a. Treating starch containing from 0.25 to 0.30% w/w protein with an effective amount of reactant whereby organoleptic impurities and/or precursors of organoleptic impurities are converted into hydrolysed and/or oxidatively

degraded organoleptic impurities and/or precursors of organoleptic impurities, and

b. Bleaching said starch and hydrolysed and/or oxidatively degraded organoleptic impurities and/or precursors of organoleptic impurities in presence of from 1000 to 4000 ppm active chlorine based on dry substance of starch, at pH of 3.0 to 11.5, preferably pH of from 9.0 to 10.0, at a temperature from 10 to 55°C, for a time between the dosing time of the active chlorine up to 24 hours,

c. Recovering stabilised starch.

The current invention relates to a process wherein the treatment of step a) is performed with a reactant selected from proteases, preferably an endoprotease.

The current invention relates to a process comprising the following steps:

a) Treating starch with a protease or a mixture of proteases which is at least containing an endoprotease, and said protease or mixture of proteases is added in an effective amount to convert organoleptic impurities and/or precursors of organoleptic impurities into hydrolysed and/or oxidatively degraded organoleptic impurities and/or precursors of organoleptic impurities.

b) bleaching said starch and hydrolysed and/or oxidatively degraded organoleptic impurities and/or precursors of organoleptic impurities with active chlorine,

c) washing, and

d) optionally drying.

Furthermore, the current invention relates to stabilised starch with improved viscosity stability and/or improved setting properties upon cooling in comparison to starch solely treated with active chlorine. These starches are obtainable according to the process of the current invention.

The current invention relates to stabilised waxy starch obtainable according to the process of the current invention with improved viscosity stability in comparison to waxy starch bleached with active chlorine.

The current invention relates to stabilised regular corn starch obtainable according to the process of the current invention with improved setting properties upon cooling in comparison to native regular corn starch.

Additionally, the current invention relates to the use of said stabilised starch in feed, food, pharma products and cosmetic products. The food is selected from the group consisting of sauces, spreads, dressings, soups, convenience food, stabilisers for meat products, bakery products, fillings and creams. The pharma products are selected from the group consisting of tablets, and dusting powder.

Furthermore the current invention relates to a sauce containing from 1.5% to 4% of said stabilised starch.

The current invention further relates to tablets containing from 3% to 80% of said stabilised starch.

Description of figures

Figure 1 : Brabender viscograph (at pH = 3) of product (waxy corn starch) treated with protease followed by active chlorine treatment. The product (A1) has improved viscosity stability compared to the starch treated with active chlorine (A0 = bleached).

Figure 2 : Brabender viscograph (at pH as is) of product (regular corn starch) treated with protease, washed, followed by active chlorine treatment.

The product (D2) has improved setting properties (i.e. a quick rise in viscosity when starch paste is cooled).

Detailed description

The current invention relates to a process according to claim 1 for preparing stabilised starches and said process is comprising the following steps:

a. Treating starch with an effective amount of reactant whereby organoleptic impurities and/or precursors of organoleptic impurities are converted into hydrolysed and/or oxidatively degraded organoleptic impurities and/or precursors of organoleptic impurities, and

b. Bleaching starch and hydrolysed and/or oxidatively degraded organoleptic impurities and/or precursors of organoleptic impurities,

c. Recovering stabilised starch.

All starches can be used to prepare the stabilised starches. The starches may be used as such (native or regular) or they may be chemically modified before or after the treatment with active chlorine. The native source can be banana, corn, pea, potato, sweet potato, barley, wheat, rice, sago, amaranth, tapioca, sorghum, waxy maize, waxy rice, waxy barley, waxy potato, waxy sorghum, starches containing high amylose and the like.

Preferably starches are selected from the group consisting of waxy, root, tuber, and regular corn starch. The waxy starches are including but not limited to waxy maize, waxy rice, waxy wheat, waxy sorghum, waxy barley, amylose free potato and the like. Furthermore, references to starch are also meant to include starches containing protein, whether the protein is endogenous protein, or added protein from an animal and/or plant source, such as zein, albumin, soy protein and the like.

It is known that waxy starches, root or tuber starches normally suffer from a pronounced viscosity breakdown during prolonged heating. Therefore the stabilization effect due to the treatment of the present invention is most beneficial in these cases. The treatment with active chlorine is already resulting in a stabilisation as is mentioned in EP 0 811 633, but surprisingly the stabilisation effect is further pronounced with the treatment of the current invention. On the other hand, cereal starches such as maize, wheat, sorghum or leguminous starches such as smooth pea, bean and the like, and high amylose starches show no viscosity breakdown when heated at neutral pH under atmospheric conditions. Nevertheless these starches are further stabilized by the treatment of the present invention.

Despite the fact that the intention is to replace the sometimes difficult to control chemical cross-bonding reaction (e.g. by phosphorus oxychloride, sodium trimetaphosphate, adipic anhydride and the like) and prepare essentially clean-label starches a combination with this kind of modification can be beneficial too for further enhanced viscosity stabilization. When the reaction is carried out in combination with a chemical modification such as acetylation, hydroxypropylation or n-octenylsuccinylation and the like, the bleaching can occur before, during or after the chemical modification reaction.

The further stabilisation is due to the treatment with an effective amount of a reactant, which is converting the organoleptic impurities, and/or precursors of organoleptic impurities into hydrolysed and/or selected from proteases oxidatively degraded organoleptic impurities and/or precursors of organoleptic impurities. The conversion can involve a complete conversion into non-organoleptic impurities. Alternatively, it can involve partial conversion of organoleptic impurities and/or precursors into non-organoleptic impurities and further complete conversion of the residual organoleptic impurities into hydrolysed and/or oxidatively degraded organoleptic impurities and/or precursors of organoleptic impurities whereby said precursors are hydrolysed and/or oxidatively degraded as well. Or, it can be a partial conversion into non-organoleptic impurities and partial removal of these non-organoleptic impurities and further complete conversion of the residual organoleptic impurities and/or precursors into hydrolysed and/or oxidatively degraded organoleptic impurities and/or precursors of organoleptic impurities. Any alternative treatment is part of the current invention as long as the starch is freed from originally present organoleptic impurities and/or precursors and the hydrolysed and/or oxidatively degraded organoleptic impurities and/or precursors of organoleptic impurities are at least partially retained with the starch. Without going into details and without limiting ourselves, the residual hydrolysed and/or oxidatively degraded impurities contribute further to the stabilisation of the starches. The conversion of organoleptic impurities and/or precursors into hydrolysed and/or oxidatively degraded organoleptic impurities and/or precursors of organoleptic impurities results in a stabilised starch with improved viscosity stability and/or improved setting properties upon cooling. The residual hydrolysed and/or oxidatively degraded organoleptic impurities and/or precursors of organoleptic impurities do no longer negatively affect the organoleptic perception and moreover the conversion into hydrolysed and/or oxidatively degraded organoleptic impurities and/or precursors of organoleptic impurities has a positive effect on the viscosity stability and/or the setting properties upon cooling of the starch product.

The organoleptic properties of these products are extremely improved in comparison to the stabilised starches prepared according to the method of EP 0 811 633, especially the odour is improved. The taste improvement is less significant than the improvement of the odour. Also the viscosity stability of these starches is improved compared to the starches of EP 0 811 633.

By the conversion of organoleptic impurities and/or their precursors into hydrolysed and/or oxidatively degraded organoleptic impurities and/or precursors of organoleptic impurities the final starch product will not negatively affect the taste, odour and/or colour of the finished food product, feed, pharma and/or cosmetic product.

The process of the current invention further comprises the recovery of the stabilised starch whereby this recovery step is a washing step and/or drying step of the stabilised starch. It might further include inactivation of the reactant and/or neutralisation of the active chlorine.

It is essential for obtaining the stabilised starches of the current invention that step a) is occurring prior to step b). Optionally, a washing step, neutralisation of reactant and/or drying step is performed between step a) and step b). Preferably step b) is immediately following step a) without intermediate washing step and then the stabilisation effect is most pronounced. In step b) starch is bleached or bleaching of the residual hydrolysed and/or oxidatively degraded organoleptic impurities and/or precursors of organoleptic impurities is taking place as well.

The current invention relates to a process wherein the bleaching step b) is performed with 100-8000 ppm active chlorine based on dry substance of starch, preferably between 500-5000 ppm.

The active chlorine can be obtained from hypochlorite which may be used as sodium hypochlorite, potassium hypochlorite, calcium or magnesium hypochlorite. The hypochlorite may also be replaced with a combination of reactants which are capable of forming active chlorine in situ, e.g. peracetic acid and/or hydrogen peroxide in the presence of excess (is molar excess compared to hydrogen peroxide) chloride ions.

Furthermore, the current invention relates to a process wherein step b) is performed at a temperature of from 5°C- 60°C, preferably from 10- 55°C, more preferably from 20 to 55°C. The current invention further relates to a process wherein step b) is performed at pH from 3 to 12, preferably from 7.5 to 11.5, more preferably from 8.5 to 11. It is seen that the active chlorine treatment can occur at slightly acidic, neutral and alkaline conditions. At a pH higher than 11.5 gelatinisation more easily occurs and therefore bleaching reactions at pH up to 11.5 are more effective.

Finally, the process is **characterised in that** bleaching of step b) is performed during a time between the dosing time of active chlorine up to 24 hours. The bleaching can actually be finalised after complete addition of the active chlorine, such that the dosing time of the active chlorine is the effective reaction time of the bleaching step. The dosing time might be dependent upon other factors, such as for example exothermicity of the reaction etc. The maximal reaction time for the bleaching step is 24 hours. It is obvious that the other parameters, such as active chlorine content (in ppm) , the reaction temperature and pH and their combination will have an effect on the length of the reaction time. Furthermore the raw material, such as type of starch and/or content of protein can have a further effect on the selection of the appropriate combination of the reaction parameters of the bleaching step.

The current invention further relates to a process comprising the following steps:

a. Treating starch containing from 0.2 to 0.4% w/w protein with an effective amount of reactant selected from proteases whereby organoleptic impurities and/or precursors of organoleptic impurities are converted into hydrolysed and/or oxidatively degraded organoleptic impurities and/or precursors of organoleptic impurities, and

b. Bleaching said starch and hydrolysed and/or oxidatively degraded organoleptic impurities and/or precursors of organoleptic impurities in presence of from 500 to 4000 ppm active chlorine based on dry substance of starch, at pH of 8.5 to 11, preferably pH of 8.5 to 10.5, at a temperature from 5 to 60°C, preferably from 10 to 55°C, for a time between the dosing time of the active chlorine up to 24 hours,

c. Recovering stabilised starch.

Starch containing from 0.2 to 0.4% w/w protein is a typical example of cereal starches. In a typical embodiment for obtaining stabilised cereal starches the following process parameters for the bleaching step are applied: 500-4000 ppm active chlorine, at pH 3.0 - 11.5, preferably 8.5 -10.5, at a temperature from 5-60 °C, preferably from 10-55 °C and the reaction time is finalised instantaneously, i.e. reaction time as short as dosing time of active chlorine is possible. The reaction time should not be longer than 24 hours. At a pH of 11.5 swelling of the starch granules might occur and eventually swelling inhibiting salts have to be added.

In a more typical embodiment with wheat or regular corn starch the pH of the bleaching step is allowed to be between 4 and 10.5 and still stabilised starches are obtained while applying the previously mentioned process parameters in respect of reaction temperature, active chlorine content and reaction time.

Most preferably, the stabilizing effect is most pronounced when the bleaching step is performed in presence of 4000 ppm C1 at pH 11.

The current invention further relates to a process comprising the following steps:

a. Treating starch containing from 0.25 to 0.30% w/w protein with an effective amount of reactant selected from proteases whereby organoleptic impurities and/or precursors of organoleptic impurities are converted into hydrolysed and/or oxidatively degraded organoleptic impurities and/or precursors of organoleptic impurities, and

b. Bleaching said starch and hydrolysed and/or oxidatively degraded organoleptic impurities and/or precursors of organoleptic impurities in presence of from 1000 to 4000 ppm active chlorine based on dry substance of starch, at pH of 8.5 to 11, preferably pH of from 9.0 to 10.0, at a temperature from 10 to 55°C, for a time between the addition time of the active chlorine up to 24 hours,

c. Recovering stabilised starch.

Waxy starch is a typical example of a starch containing from 0.25 to 0.30% w/w protein. In a preferred embodiment using as raw material waxy starch containing from 0.25 to 0.30 w/w protein, the stabilised starches are obtained by applying in the bleaching step 2000 ppm active chlorine at pH 10, or with 3000-4000 ppm active chlorine at pH 9.

In examples where the protein content of the starches is lower than 0.2% w/w, such as for tuber starches, it might be necessary to reduce in the bleaching step of the process the amount of active chlorine to values as low as 100 ppm active chlorine and yet the stabilisation effect as described in the current invention is observed.

In examples wherein the protein content of the starch is higher than 0.4 % w/w it is possible to increase in the bleaching step the active chlorine concentration up to 8000 ppm active chlorine, preferably 6000 ppm active chlorine and yet no hydrolytic breakdown of the starch is observed.

Starches containing these high levels of proteins can be obtained by less extensive washing of the starch slurry during the starch processing or proteins can be added to the starch slurry and said products can be used as the raw material (starting material) of the currently disclosed process. By using starches with these high levels of proteins, stabilised starches are obtained by the process of the current invention. This effect is even more pronounced when adding non-aqueous soluble proteins. (= insoluble proteins)

The current invention also involves the adaptation of the active chlorine concentration (content in ppm on dry substance of starch) in the bleaching step according to the presence of other non-starchy compounds, which are capable to react with active chlorine. Examples of these non-starchy compounds are lipids, pentosans, non-starch polysaccharides, reducing agents like $SO_2$, and the like.

The current invention relates to a process wherein the treatment of step a) is performed with a reactant selected from proteases, preferably endoprotease.

When referring to mixtures of these reactants, it is meant that these reactants are either reacted in a single step or in successive steps, optionally involving washing, neutralisation and/drying step in between.

Without limiting ourselves to an explanation of the observed results, it is possible that residual proteins might react with the active chlorine and optionally organic chloramines are formed. The protease can reduce the molecular weight of the proteins, and oligopeptides, are formed. Optionally these oligopeptides are reacting further with active chlorine.

By having prior to the active chlorine treatment a treatment with protease or a mixture of proteases, these optionally formed chloramines can be converted in smaller molecules, which can more easily be washed out, and they do not longer contribute to the malodour (swimming pool) and organoleptic impurities, and/or crosslinking with starch might occur.

The current invention relates to a process comprising the following steps:

a) Treating starch with a protease or a mixture of proteases which is at least containing an endoprotease, and said protease is added in an effective amount to convert organoleptic impurities and/or precursors of organoleptic impurities into hydrolysed and/or oxidatively degraded organoleptic impurities and/or precursors of organoleptic impurities,
b) reacting starch and hydrolysed and/or oxidatively degraded organoleptic impurities and/or precursors of organoleptic impurities with active chlorine,
c) washing, and
d) optionally drying.

The protease or mixture of proteases is added in an effective amount to convert organoleptic impurities and/or their precursors into hydrolysed and/or oxidatively degraded organoleptic impurities and/or precursors of organoleptic impurities.

The effective amount of the reactant such as protease or mixture of proteases is dependent from factors such as the original content of proteins in the starch applied as starting material, the optional addition of proteins, the expected effect of percentage of stabilisation in the end product of the currently disclosed process. Furthermore, the effective amount also depends on the reaction time applied during the treatment of step a). The effective amount is increasing when the reaction time is reducing, e.g. 0.1 % of commercial solution of protease is added on dry substance of starch when reacting for 1 hour, whereas the amount is increased to 0.15% when the reaction time is only 30 minutes.

The reaction parameters such as pH and temperature are depending upon the type of protease. Preferably, the protease or the mixture of proteases is selected such that the reaction parameters are similar to the reaction parameters of the bleaching of step b). The advantage of this selection results in a less expensive and less time consuming process. Actually the temperature of the treatment in step a) should always be below the gelatinisation temperature of the starch applied as starting material.

The inactivation of the reactant, the protease and/or the mixture of proteases can be achieved by lowering the pH, preferably below 4 and/or by increasing the temperature or by addition of compounds such as needed for neutralisation of active chlorine. The increase of the temperature has to be controlled in order to avoid gelatinisation of the starch. The inactivation of the protease can be performed directly after step a) or after the bleaching of step b). The latter option is preferred since this procedure is avoiding too many pH switches. It might further include adjustment of pH of final product. Preferably the pH is adjusted to 5.5.

Washing can be done using conventional equipment such as hydroclones, centrifuges or pressure filters.

Optionally the product is dried in a flash dryer, ring dryer, spray dryer, belt dryer or the like.

Neutralisation of active chlorine, if needed, can be accomplished by admixing a suitable neutralisation compound such as for example sodium metabisulfite, sodium bisulfite, sodium sulfite, potassium bisulfite, potassium sulfite, sulfur dioxide gas or the like, in a sufficient quantity to achieve a value of no detectable chlorine.

The effect of the protease treatment before bleaching is a reduced viscosity breakdown of the starch when it is heated in water at 95 °C.

Bleaching at certain hypochlorite concentrations and pH levels is known to improve the viscosity stability at 95 °C, as it is described in EP 0 811 633. Surprisingly, the stabilisation effect is more pronounced when the bleaching is preceded by a protease treatment preferably endoprotease. The additional benefit of this protease treatment is an improvement of the organoleptic properties, such as the odour profile.

To improve the taste profile it is prerequisite to choose a protease that does not result in the formation of bitter peptides. Several protease mixtures have been designed by enzyme producers to reduce bitterness of protein hydrolysates (e.g. Protamex and Flavourzyme from Novozymes). Most of these protease mixtures are mixtures of endoproteases and exopeptidases.

Furthermore, the current invention relates to stabilised starch obtainable according to the process of the current invention with improved viscosity stability and/or improved setting properties upon cooling in comparison to starch solely treated with active chlorine.

The current invention relates preferably to stabilised waxy starch obtainable according to the process of the current invention with improved viscosity stability in comparison to waxy starch bleached with active chlorine, while applying waxy starch as starting material.

The current invention further relates to stabilised regular corn starch obtainable according to the process of the current invention with improved setting properties upon cooling in comparison to native regular corn starch.

Surprisingly, it is observed that by having these organoleptic impurities and/or their precursors altered and/or converted prior to the active chlorine treatment, and optionally including an intermediate washing step, the viscosity stability of these starches, and/or the setting properties upon cooling are improved. In particular, the viscosity stability is improved at high temperature and/or acid conditions and/or shear conditions.

These products can be further characterised by their viscosity breakdown, according to the following formula:

$$\text{\% viscosity breakdown} = 100 * (\text{BU } 95\,°C - \text{BU } 30' \ 95\,°C) / \text{BU } 95\,°C$$

Wherein:

BU 95 °C = the viscosity measured in Brabender units at the start of the holding period at 95 °C and, BU 30' 95 °C = the viscosity in Brabender units measured at the end of the holding period at 95 °C (=30 minutes later).

As it was mentioned earlier on, the set of reaction conditions, specifically of the bleaching step, and consequently the resulting reduction in viscosity breakdown is dependent on starch type and purity. If for a certain type of starch a reduced viscosity breakdown is observed by applying certain bleaching reaction parameters, it is found that by applying the process of the current invention (= including step a)), such as a treatment with a protease or a mixture of proteases, preferably an endoprotease or a mixture of proteases containing an endoprotease the odour of the bleached starch is improved, and the viscosity stabilization is further increased. This is i.a. observed during the 30 minutes holding period at 95 °C by a rising viscosity curve in the Brabender graph).

By bleaching waxy corn starches the viscosity breakdown at pH of 5.5 can typically be reduced to values of 0-5%. Surprisingly, it is found that by applying the process of the current invention, such as having in step a) the treatment with a protease or a mixture of proteases, preferably an endoprotease or a mixture of proteases containing an endoprotease the viscosity breakdown is further reduced and a rising viscosity curve is observed with a viscosity increase from 0-25 %, preferably 6-20%, more preferably 8-20% during the holding time at 95 °C (negative viscosity breakdown value).

Organoleptic impurities and/or precursors are converted into hydrolysed and/or oxidatively degraded organoleptic impurities and/or precursors of organoleptic impurities by using as reactant a protease, preferably an endoprotease immediately followed by the treatment with active chlorine, without an intermediate washing step. This process allows conversion of organoleptic impurities and/or precursors of organoleptic impurities into hydrolysed and/or oxidatively degraded organoleptic impurities and/or precursors of organoleptic impurities and the viscosity stabilisation is extremely pronounced. An intermediate washing step further improves the removal of organoleptic impurities and/or precursors of organoleptic impurities.

In a more typical embodiment, the stabilisation effect is observed by using in step a) of the current process the following reaction parameters: pH is 8, temperature is 50°C and the protease is added in an amount of 0.5 g (containing 2.4 proteolytic units AU/g) to 500 g dry substance of starch and the reaction time is 1 hour. Hypochlorite is added and pH is adjusted to 9 at 30°C. The bleaching step continues for 1 hour and the active chlorine is neutralised with sodium pyrosulphite. Further on, the protease is inactivated by reducing pH to 3. The slurry is neutralised to pH 5.5 after 30 minutes and the product is filtered, washed and dried in a fluid bed. The resulting product has a considerable lower amount organic acids and aldehydes which improves the organoleptic properties. The residual protein content is also considerably lower and the improved stabilisation is demonstrated by a rising viscosity curve in the Brabender profile.

Additionally, the current invention relates to the use of said stabilised starch in feed, food, pharma products and cosmetic products.

The stabilised starch not suffering from any negative organoleptic perception such as malodour, for example swimming pool odour, and further characterised with improved viscosity stability and/or improved setting properties upon cooling, is particular suitable for the use in sauces, spreads, dressings, soups, convenience food, stabiliser for meat products, bakery products, fillings and creams.

Said product is further used in pharma products, among which there are tablets, and dusting powders.

Furthermore the current invention relates to a sauce containing from 1.5% to 4% of said stabilised starch or stabilised waxy starch.

A sauce containing the stabilised starch of the current invention, preferably stabilised waxy starch has a good, heavy texture, glossy and smooth appearance. Its taste is without any off-taste and the mouthfeel is good. Furthermore, it shows excellent freeze/thaw stability and no loss of structure of syneresis is observed.

The current invention further relates to tablets containing from 3% to 80% of said stabilised starch or stabilised waxy starch.

The current invention has the following advantages:

- the starch product does not negatively affect the taste, odour and/or colour
- it provides stabilised starch with high viscosity stability and/or high, fast setting properties upon cooling, preferably stabilised waxy starches with high viscosity stability and regular starches with improved setting properties upon cooling
- it allows universal use in feed, food, pharma and cosmetic products
- it allows clean labelling, no use of chemical reagents which are conventionally used for starch modification.

The current invention is further illustrated by way of the following examples:

Analytical Methods

Sensorial evaluation - Odour evaluation

Starches (4g) were weighed and Deviant™ water was added until a total weight of 100 g was reached in 250 ml Duran bottles. The starches were pasted by heating the closed bottles in a water bath at 95 °C under gentle stirring. After 30 minutes the bottles were cooled to 50 °C. The sensorial assessment of series of maximum four samples was done by a taste panel by sniffing the pastes at 50 °C.

GC-MS

The aim of this method was to make relative comparisons of acids, aldehydes and ketones based on relative peak areas, comparing samples under exactly the same conditions.

2 gram of starch sample was weighed in the sample holder and 10 ml Evian™ water was added. The injection was done by purge and trap with cryofocussing at 130 °C. The compounds were separated in a gas chromatograph and detected by mass spectrometry (GC-MS). The GC-MS was calibrated with a calibration gas (Heptacosa).

Purge and trap conditions

| Purge &Trap model: | Tekmar 3000 |
|---|---|
| Trap : | Vocarb 3000 |
| Pre purge time: | 3 minutes |
| Pre heat time : | 5 minutes |
| Purge time: | 11 minutes |
| Dry purge time: | 3 minutes |
| Desorb preheat: | 250 °C |
| Desorb time: | 2 minutes |
| Desorb temperature: | 260 °C |
| Bake time: | 10 minutes |

(continued)

| | |
|---|---|
| Bake temperature: | 280 °C |
| Line temperature: | 150 °C |
| Valve temperature: | 150 °C |
| Mount temperature: | 60 °C |
| MCS temperature: | 40 °C |
| Sample heater: | Off |
| Cold trap model: | MFA 815 |
| Cryofocussing temp: | -130 °C |
| Final temperature: | 190 °C |

GC conditions

| | |
|---|---|
| GC model : | GC 8000 Interscience |

Column :

| | |
|---|---|
| Phase: | DB VRX |
| Film thickness: | 1.8 $\mu$m |
| Column length: | 60 meter |
| Internal diameter: | 0.32 mm |
| Supplier nr: | 123-1564 |

Temperature program :

| | |
|---|---|
| Initial temperature: | 40 °C |
| Initial time : | 5 minutes |
| Rate: | 5 °C/minute |
| Final temperature: | 250 °C |
| Final time: | 2 minutes |

MS conditions

| | |
|---|---|
| MS model: | MD 800 |
| Ionisation mode: | EI + |
| Full scan: | mass 28 to 450 |
| Scan time: | 0.5 seconds |
| Inter scan delays: | 0.05 seconds |
| Multiplier: | 350 V |

Protein content

The protein content of the starch samples was measured according to the Kjeldahl method in a Kjeltec Auto 1035 Analyser/ 1038 Sampler System. 2.5 g starch was weighed onto a weighing paper, and both the paper and the starch were transferred to the Kjeldahl tube. To the tube was added a catalyst tablet (Kjeltabs CT/5, Foss Cat. No 1527 0010) and 20 ml of concentrated sulphuric acid. A tube containing a catalyst tablet, a weighing paper and sulphuric acid was used as blank.

The tubes were placed in the block digestor preheated to 420 °C. Digestion was allowed to proceed for 1 hour and 40 minutes. After cooling the tubes were placed in the distillation unit. To each tube 65 ml water and 80 ml NaOH (min conc. 32 %, Merck 1.05590.9025) were added. The steam distillation was started and the ammonia collected in 35 ml boric acid solution (1%). The boric acid solution was prepared by dissolving 50 g of boric acid in 5 L distilled water, followed by the addition of 50 ml bromocresol green solution (50 mg in 50 ml methanol), 35 ml methyl red solution (50 mg in 50 ml methanol) and 1.5 ml 1N NaOH. The collected distillate in the boric acid solution was titrated with 0.1 N HCl until the indicator colour changed.

The nitrogen content was calculated as follows :

$$\text{N\% on dry solids} = 0.14 \ (\text{ml HCl sample} - \text{ml HCl blank}) \ / \ \text{gram of dry sample.}$$

To calculate the protein content (% on dry solids) the nitrogen content was multiplied by 6.25.

Brabender viscosities

Brabender viscosities were measured in a Brabender Viskograph-E at a concentration of 5.5 % ds in either demineralised water for the measurement of the Brabender profile at pH as is or at pH 3 in a citrate/hydrochloric acid buffer (Merck 1.09883 Titrisol®) for measurement of the profile under acidic conditions. The temperature programme started at 50 °C, followed by an increase from 50 °C till 95 °C at a rate of 1.5 °C/minute. After a holding time of 30 minutes at 95 °C cooling started at the same rate to a temperature of 50°C.

Example 1

500 g (calculated on dry basis) waxy corn starch was slurried in demineralised water at a concentration of 21.5 Bé and the slurry was heated in a jacketed glass reactor to 50°C. The pH of the slurry was adjusted to 8 with NaOH 1N.

0.5 g of protease Alcalase (2.4 L Food Grade)(2.4 Proteolytic Units AU/g, Novozymes) was added. The pH was kept constant at 8 by using NaOH 1N during 1 hour at 50°C under continuous stirring. After 1 hour the temperature was reduced to 30°C.

An amount of 14.84 g hypochlorite solution with an active chlorine content of 164.4 g/L was added dropwise. This caused a pH increase to 9.3. The pH was adjusted to 9 by addition of HCl 1N. The reaction was allowed to proceed for 1 hour at pH 9 and 30°C under continuous stirring and addition of NaOH 1N.

Thereafter the residual oxidans was neutralised by addition of 7 g of a freshly prepared 10% aqueous solution of sodium pyrosulfite.

After 15 minutes, the slurry was neutralised with HCl 1N to pH 3 for inactivation of the residual Alcalase. After 30 minutes at 30°C the slurry was neutralised with NaOH 1N to pH 5.5 and filtered over a Büchner filter under vacuum. The filter cake was reslurried in 850 g demineralised water and filtered over a Büchner filter under vacuum. This washing step was repeated twice. The resulting filter cake, obtained after three washing steps, was fluid bed dried for 10 minutes at 70°C.

The smell of this starch was evaluated by a taste panel in comparison to a control product treated with active chlorine under the same conditions but without the protease pre-treatment. An overview of the results is displayed in Table 1.

Table 1.

| Waxy corn starches bleached with 0.4 % C1 at pH 9 | | | | | |
|---|---|---|---|---|---|
| Product | Odour evaluation | GC-MS results (expressed as Area/ 1000) | | Protein (% on ds) | Viscosity breakdown (pH as is) |
| | | Total acids | Total aldehydes | | |
| A0: Control (no protease) | Swimming pool odour | 4111 | 34464 | 0.127 | 5 % |
| A1: Protease-bleaching | Acceptable odour | 731 | 11629 | 0.062 | -8 % (rising curve) |

Treatment with Alcalase before bleaching clearly improves the odour of the bleached starch as assessed by blind testing. The removal of typical malodour compounds is also proven by GC- MS analysis. The total amount of organic acids and organic aldehydes in the samples is considerably lower for the Alcalase treated sample. This reduction was e.g. observed for acetic acid, (iso) valeraldehyde, 2- methyl butanal, pentanal, hexanal, 2- heptenal, 2, 4 decadienal, 2- heptanon.

Also the protein content was significantly lower which further emphasizes the higher purity of the sample.

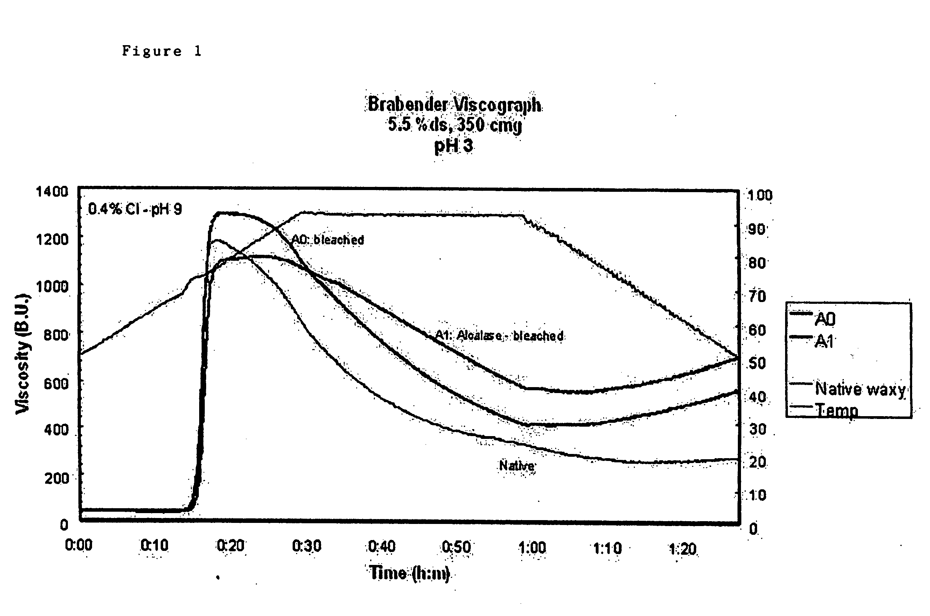

Besides the improvement of the odour the sample prepared according to this concept (A1, protease treatment followed by bleaching) has a much better stabilized viscosity in comparison to the control sample. The improved stabilization is demonstrated by a rising viscosity curve in the Brabender profile recorded at pH as is (negative viscosity breakdown value in Table 1) and the lower viscosity drop when recording the Brabender profile under acidic conditions (see Figure 1).

Example 2

Regular corn starch slurry containing 1 kg regular corn starch (calculated on dry basis) was heated in a jacketed glass reactor to 50 °C and the pH was adjusted to 8 with NaOH 1N. Alcalase (2.4 L Food Grade) (2.4 Proteolytic Units AU/g) (Novozymes) was added in a concentration of 0.1 % commercial enzyme solution on starch dry basis. The enzyme reaction was allowed to proceed for 1 hour at constant pH. The slurry was cooled and neutralised to pH 5.5.

The slurry was then dewatered on a Büchner filter, the filter cake was re-suspended in 3 L water and the slurry once more filtered over a Büchner filter. After re-slurrying hypochlorite solution with an active chlorine content of 160.0 g/L was added dropwise until an active chlorine concentration of 0.3% on starch dry basis was reached. The dosage took 11 minutes and the pH did not rise above 8.

After a reaction time of 210 minutes the slurry was neutralized with $SO_2$ and an excess of 400 ppm $SO_2$ added as sodium pyrosulphite 10 % solution) on starch dry basis. After 1 hour, residual $SO_2$ was neutralized with hydrogen peroxide (30%) and pH was adjusted to 5 by addition of HCl (4M). The slurry was dewatered on a Büchner filter and resuspended in 3 L demineralised water. The slurry was once more dewatered on a Büchner filter and fluid bed dried at 70 °C.

The results are displayed in Table 2.

Table 2

| Product | Total proteins % | Soluble protein (%) |
|---|---|---|
| Native regular corn | 0.42 | 0.045 |
| Protease treatment | 0.25 | 0.040 |

According to the sensorial evaluation, the product has an acceptable organoleptic perception, especially the odour is significantly improved.

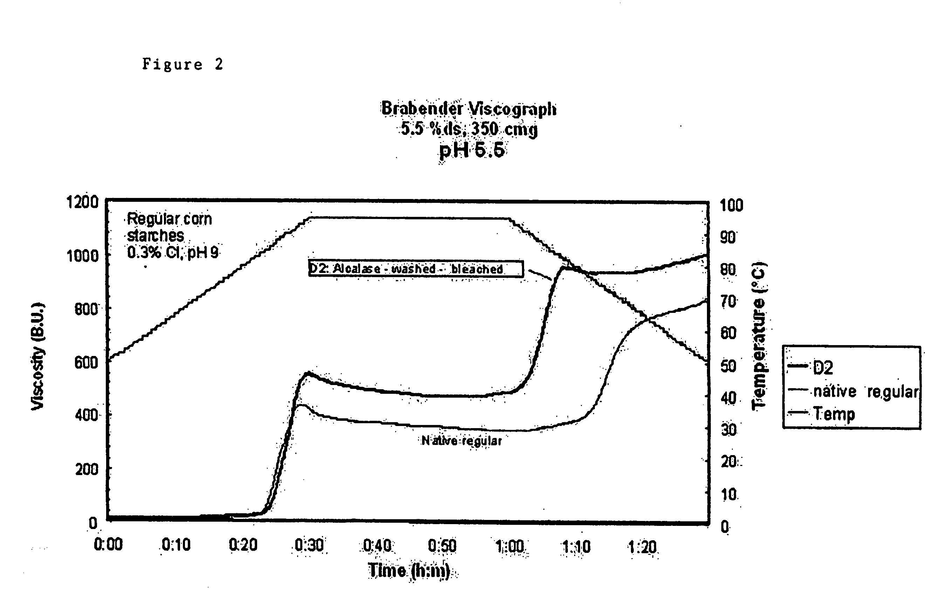

The Brabender viscosity is displayed in Figure 2.

Example 3

The following samples were prepared according to the following procedure and by applying the conditions as listed in Table 3.

500 g (calculated on dry basis) waxy corn starch with a protein content of 0.296 % was slurried in demineralised water at a concentration of 21.5 Bé and the slurry was heated in a jacketed glass reactor to 30 °C.

Protease treatment

The pH of the slurry was adjusted to 8 with NaOH 1N and 0.5 g of Alcalase 2.4 L FG (Novozymes) was added. The pH was kept constant at 8 by using NaOH 1N during 1 hour at 50 °C under continuous stirring. The slurry was cooled to 30 °C.

Intermediate washing

The pH was reduced to 3 by adding HCl 1N. After 30 minutes the slurry was neutralised with NaOH 1N to pH 5.5 and filtered over a Büchner filter under vacuum. The filter cake was reslurried in 850 g demineralised water and filtered over a Büchner filter under vacuum. This washing step was repeated twice. The resulting filter cake, obtained after three washing steps, was fluid bed dried for 10 minutes at 70 °C.

The protein content of this material was 0.082 % on starch dry basis.

450 g (calculated on dry basis) of the dried material was reslurried in demineralised water at a concentration of 21.5 Bé and the slurry was heated in a jacketed glass reactor to 30 °C.

Bleaching

An amount of hypochlorite solution corresponding to the active chlorine content listed in Table 3 was added dropwise. The pH was adjusted to the reaction pH (listed in Table 3) by adding NaOH 1 N. For the preparation of sample C4 and sample C9 10 % $Na_2SO_4$ (on starch dry basis) was added before start of the hypochlorite addition.

The reaction was allowed to proceed for 1 hour at 30 °C under continuous stirring and addition of NaOH 1N.

Thereafter the residual oxidans was neutralised by addition of a freshly prepared 10% aqueous solution of sodium pyrosulfite to a final $SO_2$ content of 400 ppm after neutralization.

After 15 minutes, the slurry was neutralised with HCl 1N to pH 5.5 and filtered over a Büchner filter under vacuum. The filter cake was reslurried in 850 g demineralised water and filtered over a Büchner filter under vacuum. This washing step was repeated twice. The resulting filter cake, obtained after three washing steps, was fluid bed dried for 10 minutes at 70 °C.

Table 3.

| | Protease pre-treatment | Bleaching conditions | | Viscosity |
|---|---|---|---|---|
| | | % C1 (on starch db) | pH | breakdown (%) |
| C1 | No | 0.2 | 10 | 1 |
| C2 | Yes | 0.2 | 10 | -7 |
| C3 | Yes, followed by intermediate washing | 0.2 | 10 | 13 |
| C4 | Yes, followed by intermediate washing | 0.1 | 12 | 8 |
| C5 | Yes | 0.1 | 9 | 24 |
| C6 | Yes | 0.2 | 9 | 5 |
| C7 | Yes | 0.3 | 9 | -2 |
| C8 | Yes | 0.1 | 10 | 23 |
| C9 | Yes | 0.4 | 9 | -20 |

Comparing C1, C2 and C3 it is seen that the concept of protease pre-treatment followed by bleaching results in significantly improved viscosity stabilization. Odour evaluation of these samples showed a strong swimming pool odour of C1 and an acceptable odour of C2 and C3, which was even perceived as very neutral for C3.

An intermediate washing thus has a further beneficial effect on the odour profile but the stability that can be reached is not so pronounced. This lower stabilizing effect can be attributed to the reduced protein content after the intermediate washing step.

From the results in Table 3 it is seen that the viscosity stabilization increases with increasing chlorine concentration from 0.1 to 0.4 % .

The odour of all protease pretreated samples in Table 2 were acceptable and swimming pool odour was significantly reduced compared to sample C1.

Example 4

Preparation of Bechamel sauce

The product of example 1 was used for preparing Bechamel sauce.

Recipe:

| Whole milk | 88.3% |
|---|---|
| Butter | 7.0% |
| Salt | 1.2% |
| Sodium caseinate | 0.5% |
| Product example 1 | 2.5% |
| Satiaxane CX 90 (Xanthan gum) | 0.5% |

The sauce was prepared in the Janke&Kunkle reactor with continuous stirring at 200rpm. The butter was melted and sodium caseinate was added together with xanthan gum. The stabilised starch (example 1) was dispersed into the milk and the whole was added to the butter mix. The whole sauce was heated between 85-95°C for 5 minutes. The recipients were filled with the prepared sauce.

Evaluation

After 1 day storage in the refrigerator, the sauce has a very good, heavy texture and a glossy, smooth appearance.
The taste of the sauce is very rich, without any off taste, and mouthfeel is good.

Freeze/thaw stability

The sauce is frozen after preparation and the following day the sauce is allowed to thaw for 1 day. The cycle is repeated 4 times.
The sauce shows excellent freeze/thaw stability after 5 cycli. No loss of structure or syneresis is seen.

**Claims**

1. A process for preparing stabilised starches which process comprises the following steps:

   a. treating starch with an effective amount of a reactant selected from proteases, whereby organoleptic impurities and/or precursors of organoleptic impurities are converted into hydrolysed and/or oxidatively-degraded organoleptic impurities and/or precursors of organoleptic impurities;
   b. bleaching said starch and hydrolysed and/or oxidatively-degraded organoleptic impurities and/or precursors of organoleptic impurities; and
   c. recovering stabilised starch.

2. A process according to claim 1, **characterised in that** the bleaching in step b) is performed with 100-8000ppm active chlorine based on the dry substance of starch.

3. A process according to claim 2, **characterised in that** the bleaching in step b) is performed at a temperature of from 5°C to 60°C, preferably from 10° to 55°C.

4. A process according to either claim 2 or claim 3, **characterised in that** the bleaching in step b) is performed at pH from 3 to 12, preferably from 7.5 to 11.5, more preferably from 8.5 to 11.

5. A process according to any one of claims 2 to 4, **characterised in that** the bleaching in step b) is performed during a time between the dosing time of active chlorine up to 24 hours.

6. A process according to any one of claims 2 to 5, **characterised in that** the process comprises the following steps:

   a. treating starch containing from 0.2 to 0.4% w/w protein with an effective amount of reactant whereby organoleptic impurities and/or precursors of organoleptic impurities are converted into hydrolysed and/or oxidatively-degraded organoleptic impurities and/or precursors of organoleptic impurities;
   b. bleaching said starch and hydrolysed and/or oxidatively-degraded organoleptic impurities and/or precursors of organoleptic impurities in presence of from 500 to 4000 ppm active chlorine based on dry substance of starch, at pH of 3.0 to 11.5, preferably pH of 8.5 to 10.5, at a temperature from 5 to 60°C, preferably from 10 to 55°C, for a time between the dosing time of the active chlorine up to 24 hours; and
c. recovering stabilised starch.

7. A process according to any one of claims 2 to 5, **characterised in that** the process comprises the following steps:

    a. treating starch containing from 0.25 to 0.30% w/w protein with an effective amount of reactant whereby organoleptic impurities and/or precursors of organoleptic impurities are converted into hydrolysed and/or oxidatively-degraded organoleptic impurities and/or precursors of organoleptic impurities;
    b. bleaching said starch and hydrolysed and/or oxidatively-degraded organoleptic impurities and/or precursors of organoleptic impurities in presence of from 1000 to 4000 ppm active chlorine based on dry substance of starch, at pH of 8.5 to 11, preferably pH of from 9.0 to 10.0, at a temperature from 10 to 55°C, for a time between the dosing time of the active chlorine up to 24 hours; and
    c. recovering stabilised starch.

8. A process according to any one of claims 1 to 7, **characterised in that** the process comprises the following steps:

    a. treating starch with a protease or a mixture of proteases, which is at least containing an endoprotease and said protease or mixture of protease is added in an effective amount to convert organoleptic impurities and/or precursors of organoleptic impurities into hydrolysed and/or oxidatively-degraded organoleptic impurities and/or precursors of organoleptic impurities;
    b. reacting said starch and hydrolysed and/or oxidatively-degraded organoleptic impurities and/or precursors of organoleptic impurities with active chlorine; and
    c. recovering stabilised starch.

9. Stabilised starch obtainable according to the process of any one of claims 1 to 8 having improved viscosity stability and/or improved setting properties upon cooling in comparison to starch solely treated with active chlorine.

10. Stabilised waxy starch obtainable according to the process of any one of claims 1 to 8 having improved viscosity stability in comparison to waxy starch solely treated with active chlorine.

11. Stabilised regular corn starch obtainable according to the process of any one of claims 1 to 8 having improved setting properties upon cooling in comparison to native corn starch.

12. Use of stabilised starch according to any one of claims 9 to 11 in feed, food, pharma products and cosmetic products.

13. Use according to claim 12, **characterised in that** the food is selected from sauces, spreads, dressings, soups, convenience food, stabilisers for meat products, bakery products, fillings and creams.

14. Use according to claim 12, **characterised in that** the pharma products are selected from tablets and dusting powder.

15. A sauce containing from 1.5% to 4% stabilised starch according to any one of claims 9 to 11.

16. Tablets containing from 3% to 80% stabilised starch according to any one of claims 9 to 11.

**Patentansprüche**

1. Verfahren zur Herstellung stabilisierter Stärken, wobei das Verfahren die folgenden Schritte umfasst:

    a. Behandeln der Stärke mit einer wirksamen Menge eines Reaktanten, ausgewählt aus Proteasen, wobei organoleptische Verunreinigungen und/oder Präkursoren organoleptischer Verunreinigungen in hydrolysierte und/oder oxidativ abgebaute organoleptische Verunreinigungen und/oder Präkursoren organoleptischer Verunreinigungen umgewandelt werden,
    b. Bleichen der Stärke und der hydrolysierten und/oder oxidativ abgebauten organoleptischen Verunreinigungen und/oder Präkursoren organoleptischer Verunreinigungen; und
    c. Gewinnen stabilisierter Stärke.

2. Verfahren nach Anspruch 1, **dadurch gekennzeichnet, dass** das Bleichen in Schritt b) mit 100-8000 ppm Aktivchlor, basierend auf der Trockensubstanz der Stärke, durchgeführt wird.

3. Verfahren nach Anspruch 2, **dadurch gekennzeichnet, dass** das Bleichen in Schritt b) bei einer Temperatur von 5°C - 60°C, vorzugsweise 10 - 55°C, durchgeführt wird.

4. Verfahren nach entweder Ansprüch 2 oder Anspruch 3, **dadurch gekennzeichnet, dass** das Bleichen in Schritt b) bei einem pH von 3 bis 12, vorzugsweise von 7,5 bis 11,5, stärker bevorzugt 8,5 bis 11, durchgeführt wird.

5. Verfahren nach einem der Ansprüch 2 bis 4, **dadurch gekennzeichnet, dass** das Bleichen in Schritt b) während einer Zeit zwischen der Dosierzeit des Aktivchlors bis zu 24 Stunden durchgeführt wird.

6. Verfahren nach einem der Ansprüche 2 bis 5, **dadurch gekennzeichnet, dass** das Verfahren die folgenden Schritte umfasst:

   a. Behandeln der Stärke, enthaltend 0,2 bis 0,4 Gew.-% Protein, mit einer wirksamen Menge eines Reaktanten, wobei organoleptische Verunreinigungen und/oder Präkursoren organoleptischer Verunreinigungen in hydrolysierte und/oder oxidativ abgebaute organoleptische Verunreinigungen und/oder Präkursoren organoleptischer Verunreinigungen umgewandelt werden;
   b. Bleichen der Stärke und der hydrolysierten und/oder oxidativ abgebauten organoleptischen Verunreinigungen und/oder Präkursoren organoleptischer Verunreinigungen in Gegenwart von 500 bis 4000 ppm Aktivchlor, basierend auf der Trockensubstanz der Stärke, bei einem pH von 3,0 bis 11,5, vorzugsweise einem pH von 8,5 bis 10,5, bei einer Temperatur von 5 bis 60 °C, vorzugsweise von 10 bis 55 °C, für eine Zeit zwischen der Dosierzeit des Aktivchlors bis zu 24 Stunden und
   c. Gewinnen der stabilisieren Stärke.

7. Verfahren nach einem der Ansprüche 2 bis 5, **dadurch, gekennzeichnet, dass** das Verfahren die folgenden Schritte umfasst:

   a. Behandeln der Stärke, enthaltend 0,25 bis 0,30 Gew.-% Protein, mit einer wirksamen Menge eines Reaktanten, wobei organoleptische Verunreinigungen und/oder Präkursoren organoleptischer Verunreinigungen in hydrolysierte und/oder oxidativ abgebaute organoleptische Verunreinigungen und/oder Präkursoren organoleptischer Verunreinigungen umgewandelt werden;
   b. Bleichen der Stärke und der hydrolysierten und/oder oxidativ abgebauten organoleptischen Verunreinigungen und/oder Präkursoren organoleptischer Verunreinigungen in Gegenwart von 1000 bis 4000 ppm Aktivchlor, basierend auf der Trockensubstanz der Stärke, bei einem pH von 8,5 bis 11, vorzugsweise einem pH von 9,0 bis 10,0, bei einer Temperatur von 10 bis 55 °C, für eine Zeit zwischen der Dosierzeit des Aktivchlors bis zu 24 Stunden und
   c. Gewinnen der stabilisieren Stärke.

8. Verfahren nach einem der Ansprüche 1 bis 7, **dadurch gekennzeichnet, dass** das Verfahren die folgenden Schritte umfasst:

   a. Behandeln der Stärke mit einer Protease oder einem Gemisch von Proteasen, das zumindest eine Endoprotease enthält und wobei die Protease oder das Gemisch, von Proteasen in einer wirksamen Menge zugegeben wird, um organoleptische Verunreinigungen, und/oder Präkursoren organoleptischer Verunreinigungen in hydrolysierte und/oder oxidativ abgebaute organoleptische Verunreinigungen und/oder Präkursoren organoleptischer Verunreinigungen umzuwandeln,
   b. Umsetzen der Stärke und der hydrolysierten und/oder oxidativ abgebauten organoleptischen Verunreinigungen und/oder Präkursoren organoleptischer Verunreinigungen mit Aktivchlor und
   c. Gewinnen stabilisierter Stärke.

9. Stabilisierte Stärke, die gemäß einem Verfahren nach einem der Ansprüche 1 bis 8 erhältlich ist, mit verbesserter Viskositätsstabilität und/oder verbesserten Absetzeigenschaften während des Abkühlen im Vergleich zu Stärke, die ausschließlich mit Aktivchlor behandelt wurde.

10. Stabilisierte wachsartige Stärke, die gemäß einem Verfahren nach einem der Ansprüche 1 bis 8 erhältlich ist, mit verbesserter Viskositätsstabilität im Vergleich zu wachsartige Stärke, die ausschließlich mit Aktivchlor behandelt wurde.

**11.** Stabilisierte normale Maisstärke, die gemäß einem Verfahren nach einem der Ansprüche 1 bis 8 erhältlich ist, mit verbesserten Absetzeigenschaften während des Abkühlens im Vergleich nativer Maisstärke.

**12.** Verwendung von stabilisierter Stärke nach einem der Ansprüche 9 bis 11 in Futter, Nahrungsmitteln. Pharmaprodukten und kosmetischen, Produkten.

**13.** Verwendung nach Anspruch 12, **dadurch gekennzeichnet, dass** das Nahrungsmittel aus Soßen, Aufstrichen, Dressings, Suppen, Fertiggerichten, Stabilisatoren für Fleischprodukte, Backwaren, Füllungen und Cremes ausgewählt ist.

**14.** Verwendung nach Anspruch 12, **dadurch gekennzeichnet, dass** die Pharmaprodukte aus Tabletten und Streupudem ausgewählt sind.

**15.** Soße, enthaltend 1,5 % bis 4 % stabilisierte Stärke nach einem der Ansprüche 9 bis 11.

**16.** Tabletten, enthaltend 3 % bis 80 % stabilisierte Stärke nach einem der Ansprüche 9 bis 11.

**Revendications**

**1.** Procédé de préparation d'amidons stabilisés, ledit procédé comprenant les étapes suivantes:

a. traitement de l'amidon avec une quantité effective d'un réactif choisi parmi les protéases, moyennant quoi des impuretés organoleptiques et/ou des précurseurs d'impuretés organoleptiques sont convertis en impuretés organoleptiques et/ou précurseurs d'impuretés organoleptiques hydrolysés et/ou dégradés par oxydation;
b. blanchiment dudit amidon et desdites impuretés organoleptiques et/ou desdits précurseurs d'impuretés organoleptiques degradés par oxidation; et
c. récupération de l'amidon stabilisé.

**2.** Procédé selon la revendication 1, **caractérisé en ce que** le blanchiment dans l'étape b) est réalisé avec 100-8000 ppm de chlore actif, sur la base de la substance sèche d'amidon.

**3.** Procédé selon la revendication 2, **caractérisé en ce que** le blanchiment dans l'étape b) est réalisé à une température comprise entre 5°C et 60°C, de préférence entre 10° et 55°C.

**4.** Procédé selon l'une quelconque des revendications 2 ou 3, **caractérisé en ce que** le blanchiment dans l'étape b) est réalisé à un pH de 3 à 12, de préférence de 7, 5 à 11, 5, de préférence de 8, 5 à 11.

**5.** Procédé selon l'une quelconque des revendications 2 à 4, **caractérisé en ce que** le blanchiment dans l'étape b) est réalisé pendant une durée comprise entre le temps de dosage du chlore actif et 24 heures.

**6.** Procédé selon l'une quelconque des revendications 2 à 5, **caractérisé en ce que** le procédé comprend les étapes suivantes :

a. traitement de l'amidon contenant 0,2 à 0,4% en poids de protéine avec une quantité effective de réactif, moyennant quoi des impuretés organoleptiques et/ou précurseurs d'impuretés organoleptiques sont convertis en impuretés organoleptiques et/ou précurseurs d'impuretés organoleptiques hydrolysés et/ou dégradés par oxydation ;
b. blanchiment dudit amidon et des impuretés organoleptiques et/ou précurseurs d'impuretés organoleptiques en présence de 500 à 4000 ppm de chlore actif, sur la base de la substance sèche d'amidon, au pH de 3,0 à 11,5, de préférence un pH de 8,5 à 10,5 ; à une température comprise entre 5 et 60°C, de préférence entre 10 et 55°C, pendant une durée comprise entre le temps de dosage du chlore actif et 24 heures ; et
c. récupération de l'amidon stabilisé.

**7.** Procédé selon l'une quelconque des revendications 2 à 5, **caractérisé en ce que** le procédé comprend les étapes suivantes :

a. traitement de l'amidon contenant 0,25 à 0,30% en poids de protéine avec une quantité effective de réactif, moyennant quoi des impuretés organoleptiques et/ou précurseurs d'impuretés organoleptiques sont convertis en impuretés organoleptiques et/ou précurseurs d'impuretés organoleptiques hydrolysés et/ou dégradés par oxydation ;

b. blanchiment dudit amidon et des impuretés organoleptiques et/ou précurseurs d'impuretés organoleptiques en présence de 1000 à 4000 ppm de chlore actif, sur la base de la substance sèche d'amidon, au pH de 8,5 à 11, de préférence un pH de 9,0 à 10,0 ; à une température comprise entre 5 et 60°C, de préférence entre 10 et 55°C, pendant une durée comprise entre le temps de dosage du chlore actif et 24 heures ; et

c. récupération de l'amidon stabilisé.

8. Procédé selon l'une quelconque des revendications 1 à 7, **caractérisé en ce que** le procédé comprend les étapes suivantes :

a. traitement de l'amidon avec une protéase ou un mélange de protéases, qui contient au moins une endoprotéase, et ladite protéase ou ledit mélange de protéases est ajouté(e) dans une quantité effective pour convertir les impuretés organoleptiques et/ou précurseurs d'impuretés organoleptiques en impuretés organoleptiques et/ou précurseurs d'impuretés organoleptiques hydrolysées et/ou dégradés par oxydation ;

b. réaction dudit amidon et desdites impuretés organoleptiques et/ou desdits précurseurs d'impuretés organoleptiques avec du chlore actif ; et

c. récupération de l'amidon stabilisé.

9. Amidon stabilisé pouvant être obtenu par le procédé selon l'une quelconque des revendications 1 à 8, ayant une stabilité à la viscosité améliorée et/ou des propriétés de prise améliorées lors du refroidissement, par rapport à l'amidon uniquement traité avec du chlore actif.

10. Amidon cireux stabilisé pouvant être obtenu selon le procédé de l'une quelconque des revendications 1 à 8, ayant une stabilité à la viscosité améliorée par rapport à l'amidon cireux uniquement traité avec du chlore actif.

11. Amidon de maïs régulier stabilisé pouvant être obtenu selon le procédé de l'une quelconque des revendications 1 à 8, ayant des propriétés de prise améliorées lors du refroidissement par rapport à de l'amidon de maïs natif.

12. Utilisation d'amidon stabilisé selon l'une quelconque des revendications 9 à 11 dans les aliments, les produits pharmaceutiques et les produits cosmétiques.

13. Utilisation selon la revendication 12, **caractérisée en ce que** l'aliment est choisi parmi des sauces, des produits à tartiner, des préparations, des soupes, des produits alimentaires complexes, des stabilisants pour produits alimentaires, des produits de boulangerie, des garnitures et crèmes.

14. Utilisation selon la revendication 12, **caractérisée en ce que** les produits pharmaceutiques sont choisis parmi des comprimés et de la poudre.

15. Sauce contenant de 1,5% à 4% d'amidon stabilisé selon l'une quelconque des revendications 9 à 11.

16. Comprimés contenant de 3% à 80% d'amidon stabilisé selon l'une quelconque des revendications 9 à 11.

Figure 1

Figure 2

Brabender Viscograph
5.5 % ds, 350 cmg
pH 5.5

**EP 1 664 126 B2**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0499306 A
- WO 9900425 A
- WO 9504082 A
- US 3607393 A
- EP 0811633 A
- US 5385608 A